# FASCICULE DE BREVET EUROPEEN

(11) **EP 2 039 238 B1**
(45) Date de publication et mention de la délivrance du brevet: **21.07.2010**
(21) Numéro de dépôt: 08300269.1
(22) Date de dépôt: 17.09.2008
(51) Int. Cl.: A01G 27/06

(54) **Contenant de culture à auto humidification naturelle à partir d'une source d'eau, barquette de culture adaptée**
Kulturbehälter mit natürlicher Selbstbefeuchtung durch eine Wasserquelle, und entsprechend adaptierte Kulturschale
Culture container with natural self-humidification from a water source, adapted culture tray

(30) Priorité: 20.09.2007 FR 0757717
(43) Date de publication de la demande: 25.03.2009
(73) Titulaire: Chamoulaud, Michel, 33700 Merignac (FR)
(72) Inventeur: Chamoulaud, Michel, 33700 Merignac (FR)
(74) Mandataire: Fantin, Laurent

(56) Documents cités:
- EP-A- 1 175 825
- WO-A-2005/015981
- DE-U1- 20 122 520
- FR-A- 1 480 584
- US-A1- 2006 207 175

## Description

La présente invention concerne un contenant de culture à auto humidification naturelle à partir d'une source d'eau, notamment d'un stockage d'eau.

L'invention couvre aussi la barquette de culture adaptée pour ce contenant.

On connaît un bac avec une réserve d'eau en partie inférieure de façon à alimenter en eau le substrat et le plant qu'il reçoit, voir par exemple le document WO-A-2005/015981.

Ce bac à réserve d'eau comprend une cloison de séparation en partie inférieure, cette cloison étant munie de perforations et apte à laisser passer des racines de petites dimensions tout en retenant le substrat.

Cette cloison est à une certaine hauteur au-dessus du fond de façon à générer un volume destiné à être empli d'eau pour former une réserve et à permettre le maintien du substrat au-dessus de ce volume d'eau.

Ainsi, les racines peuvent se développer et venir chercher l'eau dans cette réserve.

Un tel bac à réserve d'eau est donc censé ne nécessiter qu'un remplissage avec une fréquence limitée, par exemple tous les quinze jours.

Cet agencement n'est pas satisfaisant pour plusieurs raisons.

Quand il y a absence d'eau, quelle que soit la raison, les racines dans la zone de réserve d'eau se trouvent au contact de l'air, hors du substrat, ce qui provoque souvent la dégradation de ces racines qui ont à se reformer dès le remplissage de la réserve.

On note aussi que la régulation se fait par les racines qui se développent dans la réserve d'eau, ce qui limite l'homogénéité de la répartition et limite les variations d'absorption suivant la température et l'hygrométrie extérieure. En effet, la plante développe un système racinaire mais il ne lui est pas possible de le modifier rapidement pour ajuster ses capacités de puisage d'eau, au jour le jour.

Or, on sait que l'évapotranspiration varie de 1 à 10 en fonction des saisons.

De plus, il peut s'avérer nécessaire de disposer de réserves de grandes capacités pour les personnes qui sont amenées à s'absenter plusieurs mois de leur domicile, par exemple. Dans le cas des bacs à réserve d'eau, la quantité d'eau est limitée par le fait que si l'on augmente trop le volume, les racines vont rapidement se retrouver dans l'air et ce d'autant plus, que le niveau diminue.

La hauteur de la réserve d'eau est limitée par le fait que la surface libre doit normalement au maximum affleurer la cloison de séparation donc le substrat.

Or les traités de culture, notamment le recueil "Cultures en pots et conteneurs, Principes agronomiques et applications" publié par l'INRA, dans la revue horticole E.Lemaire, A Dartigues prévoient que le développement des racines est périphérique.

Ainsi, il a été constaté qu'un plant se développe de meilleure façon dans un conteneur de plus grande section car les racines n'ont pas à plonger verticalement et se développent latéralement.

Le substrat lui-même doit être à forte porosité afin d'emmagasiner une grande quantité d'eau tout en conservant une forte proportion de l'air.

Cette circulation d'air permet l'approvisionnement en oxygène du système racinaire et une évacuation du gaz carbonique produit par les racines et les micro-organismes.

De façon générale, dans les conteneurs connus, le développement se produit à la périphérie du conteneur.

L'idéal souvent reconnu est une teneur en air supérieure à 20% et une teneur en eau élevée supérieure à 25%.

En outre, il est reconnu également que la répartition de l'eau et des nutriments éventuellement adjoints doit être la plus régulière possible.

De même un drainage doit permettre tout excès d'eau.

Il est à noter que les plantes sont sensibles au stress provoqué par les hydratations irrégulières.

Le but est donc de proposer un agencement d'un contenant qui permette de maintenir un potentiel de l'eau dans le substrat aussi élevé que possible, qui permette de disposer de volumes importants d'eau, sans modifier le comportement vis-à-vis du substrat, comme décrit dans la revendication 1.

Ce contenant doit aussi permettre les changements aisés de plantes dans ledit contenant.

On sait aussi que la mise en terre des plantes, notamment en intérieur devient vite un problème car il faut retirer le substrat existant avec ses plantes, il faut placer du nouveau substrat, il faut ensuite mettre en terre les plants qui sont en motte par exemple dans des godets.

Il faut prévoir soit un substrat avec engrais incorporé soit de l'engrais à adjoindre au substrat lorsque celui-ci n'en contient pas.

Ces opérations, pratiquées depuis longtemps de façon très artisanale, demandent à être adaptées aux besoins de la clientèle qui s'attache de plus en plus à fleurir, mettre des plantes vertes ou aromatiques sur des balcons, des vérandas, des terrasses ou en intérieur.

Dans ces applications aussi en intérieur, la présente invention prévoit de pouvoir augmenter la surface cultivée par l'adjonction de surfaces plus ou moins verticalisées qui doivent être également alimentées en eau. Ceci fait l'objet d'une variante de réalisation selon la présente invention.

Ce problème de régulation de l'alimentation en eau est encore plus délicat si l'utilisateur souhaite réaliser un jardin flottant dans un contenant placé à la surface d'une pièce d'eau et incluant des variétés non aquatiques. A cet effet, il faut pourvoir puiser l'eau directement sous le contenant mais sans que les plantes qui y sont contenues, non aquatiques, soient surhydratées et pourrissent.

Ceci fait l'objet d'une autre variante de la présente invention.

Le contenant selon la présente invention est maintenant décrit en détail suivant un premier mode de réalisation particulier, préférentiel mais non limitatif ainsi que suivant des variantes, cette description étant réalisée en regard des dessins annexés sur lesquels les différentes figures montrent :
- figure 1 : une vue en coupe transversale d'un contenant selon l'invention,
- figure 2 : un contenant selon l'invention configuré pour le transport et la commercial isation,
- figure 3A : un contenant selon l'invention avec une réserve annexe amovible, en position d'attente,
- figure 3B : un contenant selon la figure 3A, en position d'utilisation,
- figure 4 : une vue d'un contenant selon la présente invention à surface de culture augmentée, et,
- figure 5 : une variante de réalisation d'un contenant pour jardin flottant.

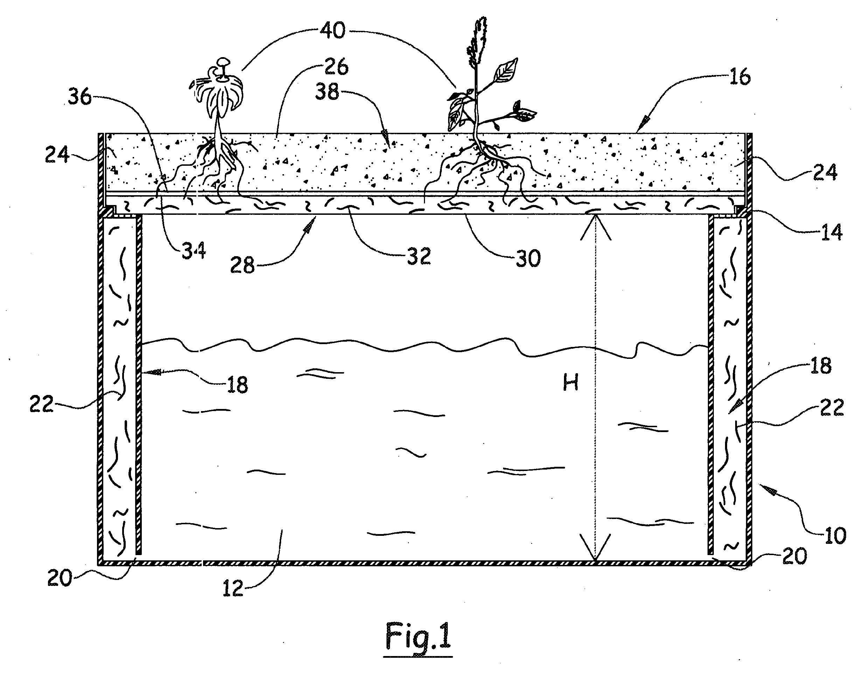

Sur la figure 1, on trouve un contenant 10 qui peut prendre tout profil de section, en l'occurrence, le contenant 10 est parallélépipédique avec un angle de dépouille lié à la fabrication moulée et la coupe longitudinale conduit à une représentation sensiblement rectangulaire.

Le contenant 10 est avantageusement en matière plastique de façon à l'obtenir industriellement.

Ce bac comporte un volume 12 de stockage de l'eau sur une très grande partie de son volume total.

Ce bac comporte également des supports 14 destinés à recevoir au moins une barquette 16 de culture.

Ce contenant 10 comporte aussi au moins un logement 18. Ce logement 18 dispose d'une communication 20 en partie inférieure avec le volume 12 de stockage de l'eau.

Dans le mode de réalisation retenu, les logements 18 sont au nombre de deux et sont disposés parallèlement aux parois longitudinales de ce contenant 10.

Chaque logement 18 comprend un matériau 22 d'absorption et de régulation, en l'occurrence et de façon tout à fait préférentielle, un matériau naturel mort tel que des racines par exemple. Selon le mode de réalisation optimisé, le matériau retenu est la sphaigne de la famille des Sphagnopsida.

Cette plante une fois séchée est capable d'une très forte absorption, une forte rétention d'eau mais aussi cette plante dispose d'une forte capacité de régulation. Cette plante peut conduire par capillarité des volumes d'eau importants sur des hauteurs importantes.

Ainsi, ses propriétés de forte capillarité autorisent la conduite d'eau sur une hauteur H maximale de plusieurs dizaines de centimètres.

Le logement 18 doit avoir une hauteur inférieure ou égale aux capacités de transfert par capillarité dudit matériau, ce qui correspond à H. Ainsi, lorsque le volume 12 de stockage comprend de l'eau, quel que soit le niveau, sur une hauteur inférieure à H, cette eau est conduite par le matériau 22 du logement 18 sur toute la hauteur de ce logement.

La barquette 16 de culture peut être réalisée par le consommateur ou peut être prête à l'emploi.

Cette barquette 16 de culture comprend des parois 24, adaptées pour contenir du substrat 26, la forme de cette barquette autorisant son positionnement dans le contenant, en appui sur les supports 14 prévus à cet effet.

Le fond de cette barquette est avantageusement perforé pour permettre l'aération et reçoit une couche de matériau 28 de répartition et de régulation.

La couche de matériau 28 est de même nature que le matériau 22 d'absorption et de régulation, en l'occurrence de la sphaigne.

Selon la présente invention, la barquette 16 de culture complète comprend :
- des parois 24 délimitant le contenu de ladite barquette,
- un fond 30 du type grille,
- une couche 32 en matériau 28 de répartition et de régulation disposée sur ce fond,
- un filet 34 de séparation,
- une couche 36 d'engrais,
- une couche 38 de substrat 26 de culture,
- des plants 40 disposés dans le substrat à un stade plus ou moins avancé.

On constate que le fond de la barquette étant grillagé, la couche 32 en matériau 28 de répartition et de régulation vient au contact du matériau 22 contenu dans les logements 18, les supports 14 étant adaptés pour atteindre ce résultat.

Ainsi, il est possible de commercialiser des barquettes 16 de culture prêtes à l'usage. Le consommateur n'a plus qu'à retirer la précédente barquette du contenant 10 pour lui substituer la nouvelle barquette.

L'intérêt est la suppression des manipulations susceptibles de provoquer des salissures.

De plus, lorsque le consommateur met en place une nouvelle barquette, celle-ci peut contenir des plantes déjà partiellement développées et qui garnissent parfaitement le contenant, excluant la période pendant laquelle les jeunes plants apparaissent rachitiques et ne couvrent pas tout le substrat, limitant alors la capacité de décoration en laissant du substrat apparaître à la vue.

La barquette 16 est placée dans le contenant 10, en partie supérieure et repose sur les supports 14.

Le matériau 22 contenu dans les logements 18 est humide car, par capillarité, l'eau contenue dans le bac 10 est absorbée.

La mise en contact du matériau 28 de répartition et de régulation de la barquette avec le matériau 22 humide provoque un transfert de l'eau dans un sens ou dans l'autre. Soit le matériau est sec et il y a apport d'eau, soit il y a trop d'eau et l'eau est reconduite vers le volume 12 de stockage de l'eau

La couche 38 de substrat 26 se trouve alors en contact avec le matériau 28 de répartition et de régulation qui est lui-même alimenté en eau par le matériau 22.

Dans le cas de la sphaigne, on comprend que la couche 38 de substrat contient les racines qui, lorsqu'elles se développent se prolongent dans la couche 28 de matériau de répartition et de régulation, qui est lui-même un enchevêtrement propice à ce développement. Cette couche 28 est aérée mais d'une part cette couche n'est jamais sèche, ce qui évite les stress liés aux chocs de variations d'hygrométrie et d'autre part les racines ne sont jamais à l'air libre.

Les échanges gazeux sont donc possibles voire favorisés.

Si le contenant est amené à être soumis à un arrosage naturel par temps de pluie, l'eau en surplus n'est pas retenue car lorsque la sphaigne est saturée, l'eau s'écoule par gravité dans le volume 12 de stockage de l'eau.

De façon avantageuse, si le contenant 10 est prévu pour être placé en extérieur, alors il est possible de prévoir un trop plein immédiatement au dessus du logement 18 de sorte à évacuer toute quantité d'eau de pluie trop importante.

On note que la capacité du volume de stockage de l'eau est limitée par pouvoir de capillarité du matériau, en l'occurrence de façon préférentielle de la sphaigne. Le pouvoir de capillarité peut aller jusqu'à 70/80 cm de hauteur de transfert.

Le fait que le volume d'eau diminue ne met pas les racines à l'air libre car elles ont tendance à rester dans le matériau 28 de régulation et de répartition qui est humidifié de façon adaptée, même quand le niveau d'eau baisse.

On note que le volume de stockage d'eau peut être important puisque la hauteur est importante.

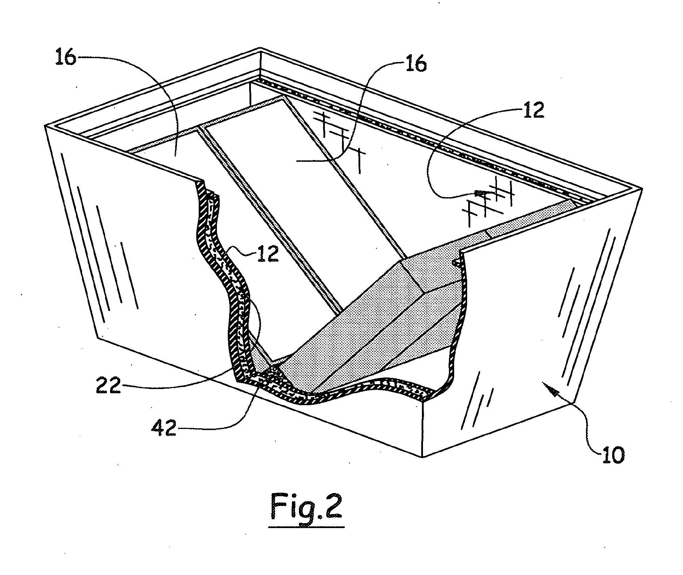

Sur la figure 2, on a représenté un bac 10 avec des barquettes 16 qui sont placées dans ledit bac suivant une diagonale de sorte à loger les bacs sans que les plants desdites barquettes puissent subir des dégradations au cours du transport.

Le bac 10 est avantageusement muni d'un élément 42 compressible dans le volume 12 de stockage d'eau. En effet un tel élément, par exemple un bloc de mousse à porosité fermée, assure la compensation lors de la prise en glace éventuelle de l'eau stockée, en période hivernale.

De plus, cet élément 42 compressible assure aussi une immobilisation des barquettes 16 lorsqu'elles sont positionnées inclinées ainsi que représenté sur la figure 2. Les barquettes peuvent être operculées mais respirantes suivant qu'il s'agit de plants ou de graines en place dans lesdites barquettes.

L'utilisateur met en service un tel contenant de façon aisée. Il retire les opercules éventuels de chaque barquette, il oriente les barquettes pour les disposer de façon transversales afin qu'elles reposent sur les supports 14. Il emplit le volume 12 de stockage de l'eau.

L'eau, par capillarité, remonte dans le matériau 22 contenu dans les logements 18 et se propage jusqu'au matériau 28 de répartition et de régulation de chaque barquette.

Une telle opération montre le côté attractif pour le consommateur du fait de la simplicité de mise en oeuvre.

Lorsqu'il s'agit par exemple de plantes aromatiques, les plants peuvent être déjà avancés et le consommateur peut utiliser très rapidement la production de son mini-jardin.

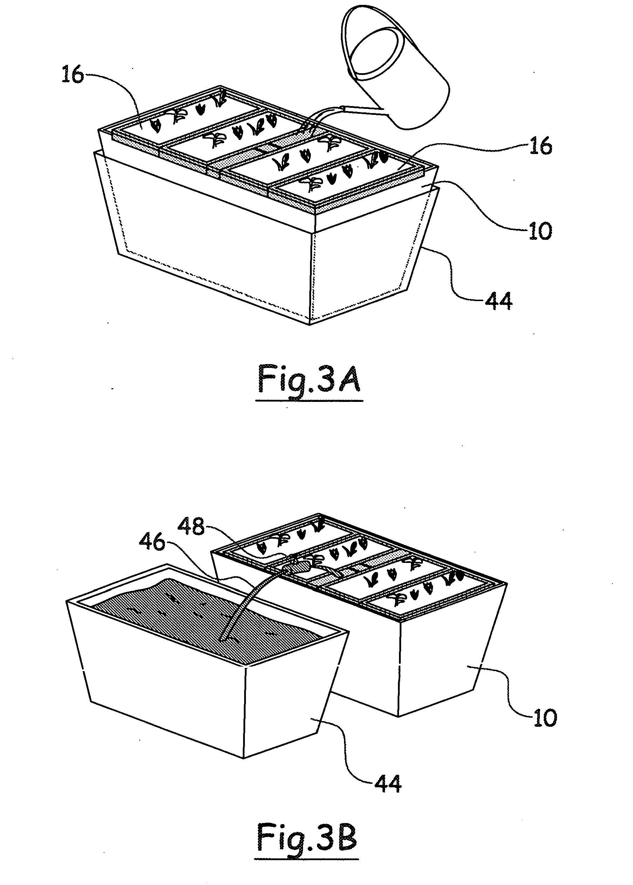

Sur les figures 3, on a montré un perfectionnement du contenant 10 selon la présente invention.

Ce perfectionnement est constitué d'un bac 44 secondaire qui est destiné à augmenter la capacité du volume 12 de stockage d'eau notamment pendant les longues périodes d'absence.

Ce bac 44 secondaire est avantageusement prévu pour venir s'emboîter par le fond du premier contenant 10 de sorte à limiter l'encombrement lors des phases de non utilisation. Ce bac 44 secondaire est moins haut que le premier mais doit avoir une hauteur au moins égale à celle de la hauteur d'eau maximale possible dans le volume 12 de stockage de l'eau.

Il est également associé un tuyau 46 de liaison pour assurer la communication fluide entre les deux bacs sur le principe des vases communicants. Ce tuyau de petit diamètre est équipé d'un robinet 48 de façon à permettre une mise en service par simple remplissage dudit tuyau, mise en place des deux extrémités dans les bacs respectifs et ouverture du robinet.

Un tel agencement permet de consommer l'eau dans les deux bacs simultanément, les niveaux des deux bacs étant en permanence identiques.

Un couvercle peut être prévu afin de limiter l'évaporation dans le bac 44 secondaire.

Ce bac 44 secondaire est avantageusement réalisé dans le même matériau que le contenant 10.

Selon une autre variante de réalisation, le bac 100 comprend de la même façon que précédemment un matériau 122 d'absorption et de régulation.

On note que les références sont les mêmes que celles du mode principal pour les mêmes éléments, augmentées de 100 sauf les éléments nouveaux qui seront nommées avec de nouvelles références.

En partie supérieure de ce bac 100, il est disposé une barquette 116 horizontale mais seulement sur une partie de la surface dudit bac. La surface non occupée par la ou les barquettes 116, reçoit une cassette 146 de transfert.

La barquette 116 est strictement identique aux barquettes 16 décrites précédemment.

Quant à la cassette 146 de transfert, elle comprend du matériau 122 d'absorption et de régulation, en l'occurrence de la sphaigne, au contact du matériau 122 d'absorption et de régulation disposé verticalement et en lien avec le volume 112 de stockage d'eau, disposé dans le logement 118.

Ainsi, la cassette 146 de transfert est également humidifiée de façon régulée à partir du volume 112 de stockage d'eau.

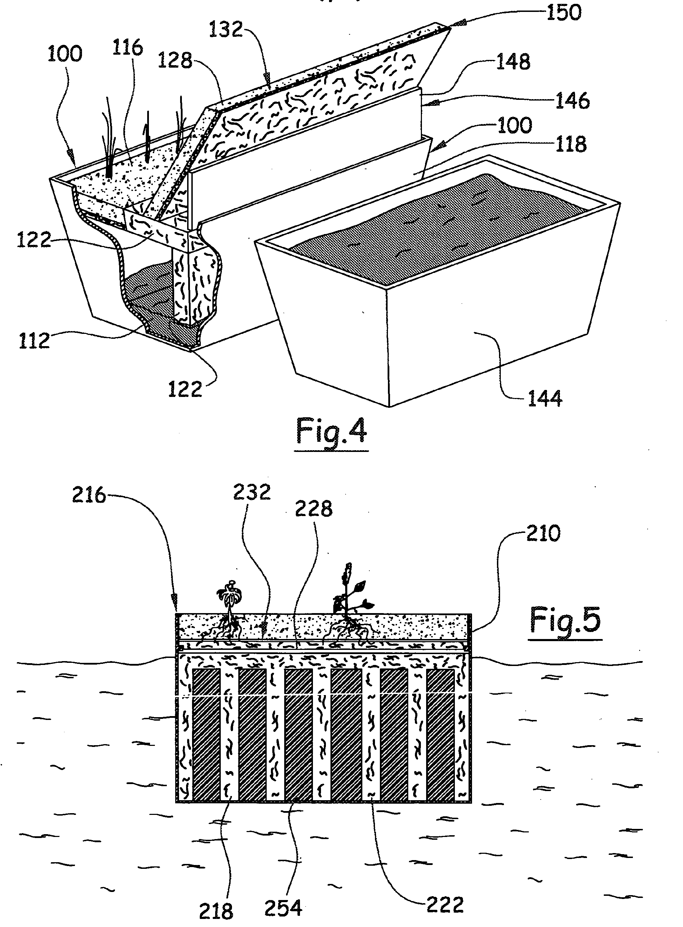

En complément, le bac 110 comprend un support 148 mécanique adapté pour recevoir des barquettes 150 verticalisables ou pour le moins inclinables. Ce support 148 mécanique peut être constitué de façon simple par un ensemble de tringles à assembler comme montré schématiquement sur la figure 4.

Ces barquettes 150 sont conçues comme les barquettes 116 mais de dimensions et d'épaisseurs différentes pour permettre leur positionnement sur le support mécanique.

Ces barquettes 150 sont adaptées pour que la couche 132 en matériau 128 de répartition et de régulation disposée en fond vienne au contact du matériau 122 de la cassette 146 de transfert, lui-même au contact du matériau 122 d'absorption et de régulation, en l'occurrence la sphaigne.

Ainsi, les barquettes 150 verticalisées se trouvent alimentées et régulées en eau provenant du volume 112 de stockage.

La surface de culture se trouve augmentée, la limite en hauteur étant celle liée au pouvoir capillaire du matériau 122 de répartition et à sa capacité à conduire de l'eau sur une hauteur donnée, de l'ordre de 80cm ainsi qu'indiqué précédemment.

L'inclinaison est limitée par le fait qu'il faut conférer aux barquettes 150 une certaine stabilité, ces barquettes étant en simple appui sur le support 148 mécanique.

Le contenant selon cette variante de réalisation de l'invention permet d'augmenter la surface cultivée en conservant la même surface au sol, ce qui est un point important dans le cas des balcons, des terrasses, des mini-jardins.

Le bac supplémentaire 144 analogue au bac 44 du mode de réalisation principal est également adaptable dans cette variante.

Afin de répondre également à un autre besoin, le contenant selon la présente invention est modifié pour obtenir un contenant flottant destiné à recevoir des plants non aquatiques et à constituer un mini-jardin flottant.

A cet effet, la variante selon la présente invention est décrite en regard de la figure 5, les références à des éléments identiques portant les mêmes références augmentées de 200.

Le bac 210 est flottant et son fond comporte au moins une ouverture 252.

Le bac 210 flottant peut, par exemple, être totalement ouvert en partie inférieure et comprendre des pains 254 de matériau flottant tel qu'une mousse à porosité fermée, polystyrène ou polyuréthane. Ces pains délimitent des logements 218 destinés à recevoir du matériau 222 d'absorption et de régulation.

En partie supérieure, une ou plusieurs barquettes 216 trouvent place, la couche 232 en matériau 228 de répartition et de régulation disposée en fond étant en contact avec le matériau 222 d'absorption et de régulation.

Un tel contenant 210 peut être déposé à la surface de l'eau d'un bassin, d'un étang ou d'un lac.

Les plants cultivés, non aquatiques, sont disposés flottants à la surface de l'eau, et ces plants sont alimentés en eau, ceci de façon régulée.

La flottabilité des pains 254 de matériau flottant est calculée pour que le matériau 222 d'absorption et de régulation des logements 218 vienne au contact de cette surface d'eau en partie inférieure.

Ainsi, l'eau du bassin, de l'étang ou du lac est conduite de façon régulée vers les barquettes 216.

## Revendications

1. Contenant (10,110,210) de culture de plantes, à auto humidification naturelle, à partir d'une source (12,112,212) d'eau, **caractérisé en ce que** ce contenant comprend :
- au moins une barquette (16,116,216) de culture en partie supérieure, au-dessus de la source (12,112,212) d'eau, ladite barquette comprenant au moins une couche (28) de répartition et de drainage,
- au moins un logement (18,118,218) contenant un matériau (22,122,222) d'absorption et de régulation, ce logement (18,118,218) disposant d'une communication (20) avec la source d'eau,
de sorte que le matériau (22,122,222) d'absorption et de régulation de chaque logement (18,118,218) soit au contact de la couche (28) de répartition et de drainage de la barquette (16,116,216).

2. Contenant (10,110,210) de culture de plantes selon la revendication 1, **caractérisé en ce que** le matériau (22,122,222) d'absorption et de régulation est de la sphaigne.

3. Contenant (10,110,210) de culture de plantes selon la revendication 1 ou 2 **caractérisé en ce que** la couche (28) de répartition et de drainage de chaque barquette (16,116,216) est de la sphaigne.

4. Contenant (10,110,210) de culture de plantes selon la revendication 1, 2 ou 3, **caractérisé en ce que** le logement (18,118,218) a une hauteur H au plus égale à la hauteur de transfert par capillarité du matériau fibreux naturel.

5. Contenant (10,110,210) de culture de plantes selon l'une quelconque des revendications précédentes, **caractérisé en ce qu'**il comprend des supports (14) destinés à recevoir la barquette (16,116,216).

6. Contenant (10,110) selon l'une quelconque des revendications précédentes, **caractérisé en ce qu'**il comprend un bac (44,144) secondaire.

7. Contenant (10,110) selon la revendication 6, **caractérisé en ce que** le bac (44,144) secondaire est emboîtable sur ledit contenant (10,110).

8. Contenant (110) selon l'une des revendication 1 à 7, **caractérisé en ce qu'**il comprend au moins une cassette (146) de transfert avec du matériau (122) d'absorption et de régulation et au moins une barquette (150) verticalisable comportant au moins une couche (128) de répartition et de drainage prévue pour venir en contact avec le matériau (122) d'absorption et de régulation de ladite cassette (146) de transfert.

9. Contenant (210) selon l'une des revendications 1 à 5, **caractérisé en ce qu'**il est flottant et **en ce que** son fond comprend au moins une ouverture (252) de façon à pouvoir disposer ce contenant sur une surface d'eau et que le matériau (222) d'absorption et de régulation vienne au contact de cette surface d'eau.

10. Barquette (16,116,216) de culture adaptée pour le contenant (10,110,210) selon l'une des revendications 1 à 9, **caractérisée en ce qu'**elle comprend :
- des parois (24) délimitant le contenu de ladite barquette,
- un fond (30) grille,
- une couche (32) en matériau (28) de répartition et de régulation disposée sur ce fond (30),
- un filet (34) de séparation,
- une couche (38) de substrat (26) de culture,
- des plants (40) disposés dans le substrat.

11. Barquette (16,116,216) de culture adaptée pour le contenant (10,110,210) selon la revendication 10, **caractérisée en ce qu'**elle comprend de plus une couche (36) d'engrais.

## Claims

1. A plant cultivation container (10, 110, 210), with natural self-moisturisation, from a water source (12, 112 212), **characterised in that** the container includes:
- at least one cultivation tray (16, 116, 216) at a top part, above the water source (12, 112, 212), said tray comprising at least one distribution and drainage layer (28),
- at least one housing (18, 118, 218) containing an absorption and regulation material (22, 122, 222), the housing (18, 118, 218) being in communication (20) with the water source,
such that the absorption and regulation material (22, 122, 222) of each housing (18, 118, 218) is in contact with the distribution and drainage layer (28) of the tray (16, 116, 216).

2. A plant cultivation container (10, 110, 210) according to claim 1, **characterised in that** the absorption and regulation material (22, 122, 222) is sphagnum.

3. A plant cultivation container (10, 110, 210) according to claim 1 or 2, **characterised in that** the distribution and drainage layer (28) of each tray (16, 116, 216) is sphagnum.

4. A plant cultivation container (10, 110, 210) according to claim 1, 2 or 3, **characterised in that** the housing (18, 118, 218) has a height H no more than the capillarity transfer height of the natural fibrous material.

5. A plant cultivation container (10, 110, 210) according to any one of the preceding claims, **characterised in that** it comprises supports (14) intended to receive the tray (16, 116, 216).

6. A container (10, 110) according to any one of the preceding claims, **characterised in that** it comprises a secondary box (44, 144).

7. A container (10, 110) according to claim 6, **characterised in that** the secondary box (44, 144) can be fitted on said container (10, 110).

8. A container (110) according to one of claims 1 to 7, **characterised in that** it comprises at least one transfer cartridge (146) with absorption and regulation material (122) and at least one tray (150) that can be put vertical, comprising at least one distribution or drainage layer (128) designed to come into contact with the absorption and regulation material (122) of said transfer cartridge (146).

9. A container (210) according to one of claims 1 to 5, **characterised in that** it is floating and **in that** its base comprises at least one opening (252) so as to be able to dispose the container on a water surface and so that the absorption and regulation material (222) comes into contact with the water surface.

10. A cultivation tray (16, 116, 216) adapted for the container (10, 110, 210) according to one of claims 1 to 9, **characterised in that** it comprises:
- walls (24) delimiting the content of said tray,
- a grid base (30).
- a layer (32) made from distribution and regulation material (28) disposed on the base (30),
- a separation net (34),
- a layer (38) of cultivation substrate (26),
- plants (40) disposed in the substrate.

11. A cultivation tray (16, 116, 216) adapted for the container (10, 110, 210) according to claim 10, **characterised in that** it also comprises a layer (36) of fertiliser.

## Patentansprüche

1. Behälter (10, 110, 210) zum Kultivieren von Pflanzen, mit natürlicher Selbstbefeuchtung mittels einer Wasserquelle (12, 112, 212), **dadurch gekennzeichnet, dass** dieser Behälter umfasst:
- wenigstens eine Kulturschale (16, 116, 216) im oberen Teil, oberhalb der Wasserquelle (12, 112, 212), wobei die Schale wenigstens eine Verteilungs- und Entwässerungsschicht (28) umfasst,
- wenigstens eine Aufnahme (18, 118, 218), die ein Material (22, 122, 222) zum Aufsaugen und Regulieren enthält, wobei diese Aufnahme (18, 118, 218) über eine Verbindung (20) mit der Wasserquelle verfügt, so dass das Aufsaug- und Regulierungsmaterial (22, 122, 222) einer jeden Aufnahme (18, 118, 218) mit der Verteilungs- und Entwässerungsschicht (28) der Schale (16, 116, 216) in Kontakt ist.

2. Behälter (10, 110, 210) zum Kultivieren von Pflanzen nach Anspruch 1, **dadurch gekennzeichnet, dass** das Aufsaug- und Regulierungsmaterial (22, 122, 222) Torfmoos ist.

3. Behälter (10, 110, 210) zum Kultivieren von Pflanzen nach Anspruch 1 oder 2, **dadurch gekennzeichnet, dass** die Verteilungs- und Entwässerungsschicht (28) einer jeden Schale (16, 116, 216) Torfmoos ist.

4. Behälter (10, 110,210) zum Kultivieren von Pflanzen nach Anspruch 1, 2 oder 3, **dadurch gekennzeichnet, dass** die Aufnahme (18, 118, 218) eine Höhe H aufweist, die höchstens gleich der Transporthöhe durch Kapillarwirkung des natürlichen Fasermaterials ist.

5. Behälter (10, 110, 210) zum Kultivieren von Pflanzen nach einem der vorhergehenden Ansprüche, **dadurch gekennzeichnet, dass** er Halter (14) umfasst, die dazu bestimmt sind, die Schale (16, 116, 216) aufzunehmen.

6. Behälter (10, 110) nach einem der vorhergehenden Ansprüche, **dadurch gekennzeichnet, dass** er einen sekundären Behälter (44, 144) umfasst.

7. Behälter (10, 110) nach Anspruch 6, **dadurch gekennzeichnet, dass** der sekundäre Behälter (44, 144) über den Behälter (10, 110) schiebbar ist.

8. Behälter (110) nach einem der Ansprüche 1 bis 7, **dadurch gekennzeichnet, dass** er wenigstens eine Transportkassette (146) mit Aufsaug- und Regulierungsmaterial (122) sowie wenigstens eine vertikalisierbare Schale (150) umfasst, die wenigstens eine Verteilungs- und Entwässerungsschicht (128) enthält, welche vorgesehen ist, um mit dem Aufsaug- und Regulierungsmaterial (122) der Transportkassette (146) in Kontakt zu gelangen.

9. Behälter (210) nach einem der Ansprüche 1 bis 5, **dadurch gekennzeichnet, dass** er schwimmend ist und dass sein Boden wenigstens eine Öffnung (252) aufweist, so dass dieser Behälter auf einer Wasseroberfläche angeordnet werden kann, und dass das Aufsaug- und Regulierungsmaterial (222) mit dieser Wasseroberfläche in Kontakt gelangt.

10. Kulturschale (16, 116, 216), die für den Behälter (10, 110, 210) nach einem der Ansprüche 1 bis 9 geeignet ist, **dadurch gekennzeichnet, dass** sie umfasst:
- Wände (24), die den Inhalt der Schale begrenzen,
- einen Gitterboden (30),
- eine Schicht (32) aus Verteilungs- und Regulierungsmaterial (28), die auf diesem Boden (30) angeordnet ist,
- ein Trennnetz (34),
- eine Schicht (38) aus Kultursubstrat (26),
- in dem Substrat angeordnete Setzlinge (40).

11. Kulturschale (16, 116, 216) nach Anspruch 10, die für den Behälter (10, 110, 210) geeignet ist, **dadurch gekennzeichnet, dass** sie zusätzlich eine Düngerschicht (36) umfasst.
